# EUROPÄISCHE PATENTSCHRIFT

(11) **EP 0 545 508 B1**
(45) Veröffentlichungstag und Bekanntmachung des Hinweises auf die Patenterteilung: **17.01.1996**
(21) Anmeldenummer: 92250341.2
(22) Anmeldetag: 19.11.1992
(51) Int. Cl.: H02B 13/035

(54) **Metallgekapselte gasisolierte Schaltanlage mit einem Kabelanschlussgehäuse**
Metal-enclosed, gas insulated switch installation with a cable terminal box
Appareillage de commutation blindé à gaz isolant avec une boîte de raccordement de câble

(30) Priorität: 06.12.1991 DE 4140776
(43) Veröffentlichungstag der Anmeldung: 09.06.1993
(73) Patentinhaber: SIEMENS AKTIENGESELLSCHAFT, D-80333 München (DE)
(72) Erfinder: Poth, Rainer, W-6368 Bad Vilbel (DE)

(56) Entgegenhaltungen:
- DE-A- 2 127 055
- DE-A- 2 744 502
- DE-U- 7 208 413
- SIEMENS POWER ENGINEERING, Bd. 3, 1981, Passau, DE; Seiten 37-42, WILKE LÜBBEN et al.: "SF6-Insulated Switchpanels Incorporating 3AF Vacuum Circuit-Breakers"

## Beschreibung

Die Erfindung betrifft eine metallgekapselte gasisolierte Schaltanlage mit einem Kabelanschlußgehäuse und einem anschließenden Schaltkammergehäuse sowie mit einem zwischen dem Kabelanschlußgehäuse und dem Schaltkammergehäuse angeordneten Tragisolator für einen die Schaltkammer stützenden Tragkörper, wobei der Tragisolator einen Anschlußkörper für einen Kabelleiter aufnimmt und Durchtrittsöffnungen für das Isoliergas besitzt und wobei ferner das Schaltkammergehäuse mit einer Vorrichtung zur Druckentlastung versehen ist.

Eine Schaltanlage dieser Art ist durch die DE-Firmendruckschrift: Siemens, "Leistungsschalter-Festeinbauanlage bis 36 kV ... Katalog HA 35.1-1986" bzw. die DE-Literaturstelle etz Bd. 105 (1984), Heft 17, Seite 898 bis 901 bekanntgeworden. Die Durchtrittsöffnungen haben dabei nicht nur die Aufgabe, einen ständigen Druckausgleich zwischen dem Schaltkammergehäuse und dem Kabelanschlußgehäuse zu ermöglichen. Sie sollen vielmehr auch das Kabelanschlußgehäuse vor Zerstörung durch hohen Druck schützen, wenn ein Störlichtbogen am Kabelanschluß auftritt. In diesem Fall kommt es zu einer Druckentlastung in Richtung des Schaltkammergehäuses. Übersteigt auch dort der Druck eine zulässige Grenze, so kann die dort befindliche Vorrichtung zur Druckentlastung ansprechen und den Schutz der Anlage sicherstellen.

Der Erfindung liegt ausgehend von einer Schaltanlage der beschriebenen Art die Aufgabe zugrunde, den Schutz des Kabelanschlußgehäuses zu verbessern, ohne dessen Konstruktion grundsätzlich zu ändern.

Gemäß der Erfindung wird diese Aufgabe dadurch gelöst, daß in dem Raum zwischen den Durchtrittsöffnungen und dem Anschlußkörper wenigstens ein nahe dem Kabelanschlußkörper beginnender und das Schaltkammergehäuse und das Kabelanschlußgehäuse verbindender Kanal vorgesehen ist. Durch diesen Kanal wird nicht nur der für den Durchtritt des Gases bereitstehende Querschnitt vergrößert. Wesentlich ist vor allem die Erzeugung einer Gasströmung nahe dem Kabelleiter, von dem erfahrungsgemäß Störlichtbögen ausgehen können. Je nach der Art des auftretenden Fehlers können unterschiedliche Vorgänge ablaufen: ein schwacher Störlichtbogen wird möglicherweise durch die von ihm selbst hervorgerufene Gasströmung gelöscht. Ein stärkerer Störlichtbogen wird aufgrund der dann auch stärkeren Gasströmung in das Schaltkammergehäuse überführt, wo er zusätzlich der Gasströmung ausgesetzt ist, die sich durch die Durchtrittsöffnungen erstreckt. Sollte er dennoch bestehen bleiben, so kann schließlich die Vorrichtung zur Druckentlastung den Schutz der Schaltanlage übernehmen. Die Beblasung eines Lichtbogens durch eine von dem Lichtbogen selbst erzeugte Löschmittelströmung ist bei Druckgasschaltern an sich bekannt. Bei Durckgasschaltern ist jedoch der Laufweg eines Schaltlichtbogens durch speziell gestaltete Schaltstücke vorgegeben, der es ermöglicht, strömungstechnisch angepaßte Einrichtungen zur Lichtbogenlöschung einzusetzen. Demgegenüber unterliegt der Entstehungsort eines Störlichtbogens in einem Kabelanschlußgehäuse statistischen Gesetzen und ist daher einer gezielten Beeinflussung weniger gut zugänglich. Dennoch erweist sich der nach der Erfindung vorgesehene Kanal als überraschend wirksam zum Schutz des Kabelanschlußgehäuses.

In überraschend einfacher Weise kann der Kanal durch zwischen dem Tragisolator und einer gegenüberliegenden Bodenfläche des Tragkörpers eingefügte Abstandsstücke gebildet sein. Wird ferner die Mündung des Kanals in dem Schaltkammergehäuse nahe den Durchtrittsöffnungen angeordnet, so kann hierdurch erreicht werden, daß die Gasströmungen durch die Durchtrittsöffnungen und den Kanal etwa rechtwinklig aufeinandertreffen und daher günstige Voraussetzungen für die Löschung eines Störlichtbogens bestehen.

Eine Anordnung der zuletzt beschriebenen Art hat eine gewisse Ähnlichkeit mit einer Schaltanlage nach der DE-A-28 13 693. Bei dieser wird das in der Schaltanlage vorhandene Isoliergas selbst als Löschmittel für Störlichtbögen benutzt. Die Gasströmung wird dabei aber im Bereich einer Sollbruchstelle der Kapselung der Anlage in einem düsenförmig gestalteten Druckentlastungskanal erzeugt. Diese bekannte Anordnung ist somit nur bei so großem Überdrücken wirksam, daß die Vorrichtung zur Druckentlastung anspricht. Wesentlich für die Erfindung ist demgegenüber die Erhöhung der inneren Sicherheit derart, daß nicht in jedem Fall die Vorrichtung zur Druckentlastung ansprechen muß. Ferner weist die Schaltanlage nach der genannten Offenlegungsschrift einen einzelnen Gasraum auf und betrifft nicht den der Erfindung zugrundeliegenden Fall, daß zwei unterschiedlich beschaffene und unterschiedlich große Gasräume zusammengefügt sind.

An sich ist es bekannt, Kapselungsgehäuse für gasisolierte Schaltanlagen örtlich mit einer größeren Wanddicke auszuführen. Hierdurch werden Zonen einer erhöhten Widerstandsfähigkeit gegen Durchbrand beim Auftreten eines Störlichtbogens geschaffen. Ein solcher Bereich mit vergrößerter Wanddicke kann auch im Zusammenhang mit der Erfindung vorteilhaft gesetzt werden. Es empfiehlt sich, diesen Bereich mit vergrößerter Wanddicke am Schaltkammerbehälter nahe der Mündung des Kanals vorzusehen.

Die Erfindung wird im folgenden anhand der Figuren näher erläutert.

Die Figur 1 zeigt eine metallgekapselte gasisolierte Schaltanlage mit einer Vakuumschaltkammer in einer aufgebrochenen Ansicht.

Die Figur 2 zeigt einen Tragisolator mit aufliegenden Abstandsstücken in der Draufsicht.

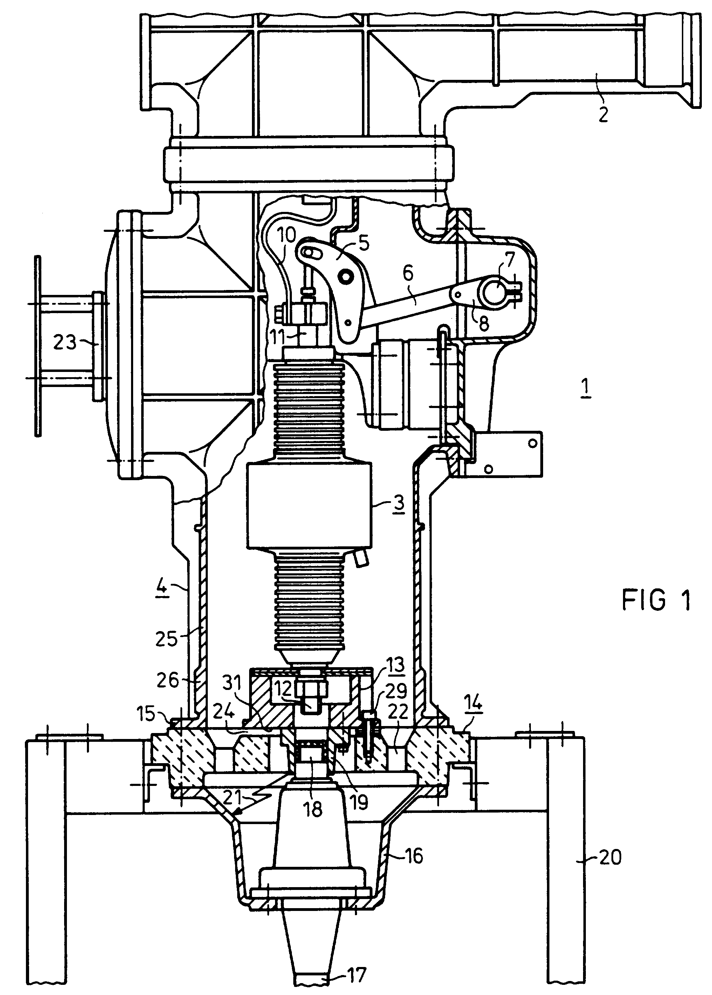

Die in der Figur 1 gezeigte gasisolierte metallgekapselte Schaltanlage 1 ist für den Mittelspannungsbereich bis etwa 36 kV geeignet und enthält Schwefelhexafluorid (SF₆) als Isoliergas. In einem oberen, abgebrochen gezeigten Gehäuse 2 befindet sich eine Sammelschiene, die in bekannter Weise mittels eines nicht dargestellten Trennschalters mit einer als Schaltkammer dienenden Vakuumschaltröhre 3 verbindbar ist. Die Vakuumschaltröhre 3 bildet zusammen mit einer gleichfalls an sich bekannten und daher nicht dargestellten Antriebsvorrichtung einen Leistungsschalter. Ein Schaltkammergehäuse 4 nimmt die Vakuumschaltröhre 3 zusammen mit Elementen eines Polantriebes auf. Insbesondere sind ein zweiarmiger Hebel 5, eine Koppelstange 6 und eine Schaltwelle 7 mit einer Kurbel 8 gezeigt. Die Schaltwelle 7 ist gasdicht nach außen durchgeführt und dort in geeigneter Weise mit der erwähnten Antriebsvorichtung verbunden. Ein Stromband 10 stellt die elektrische Verbindung zwischen der Sammelschiene bzw. einem Sammelschienentrenner und einem bewegbaren Anschlußbolzen 11 der Vakuumschaltröhre 3 her.

An dem gegenüberliegenden unteren Ende ruht die Vakuumschaltröhre 3 mit einem feststehenden Anschlußbolzen 12 in einem Tragkörper 13, der seinerseits auf einem Tragisolator 14 befestigt ist. Das Schaltkammergehäuse 4 ist an seinem unteren Ende mit einem Flansch 15 versehen, der zur Befestigung des Tragisolators 14 und gleichzeitig zur Befestigung eines Kabelanschlußgehäuses 16 dient. Ein Kabel 17 ist abgedichtet in das Kabelanschlußgehäuse 16 eingeführt. Ein Kabelleiter 18 ist mittels eines Anschlußkörpers 19 mit dem Tragkörper 13 verbunden. Wie die Figur 1 noch zeigt, ruht das Schaltkammergehäuse 4 auf einem Gestell 20, das nur teilweise dargestellt ist.

Zu den durch Störlichtbögen gefährdeten Bereichen der in der Figur 1 gezeigten Schaltanlage gehört insbesondere der Kabelanschluß, da hier ein Überschlag von dem Kabelleiter 18 oder dem Anschlußkörper 19 zu dem geerdeten Kabelanschlußgehäuse 16 auftreten kann. Ein solcher Störlichtbogen, der durch einen Pfeil 21 angedeutet ist, bewirkt einen plötzlichen starken Druckanstieg in dem Kabelanschlußgehäuse 16. Über die Fläche des Tragisolators 14 verteilt angeordnete Durchtrittsöffnungen 22 ermöglichen einen Druckausgleich in Richtung des Schaltkammergehäuses 4. Sofern auch dort der Druck zu hoch wird, spricht eine Vorrichtung 23 zur Druckentlastung an, die in bekannter Weise mit einer Brechmembran ausgerüstet sein kann.

Die Durchtrittsöffnungen 22 befinden sich auf einem Kreisbogen nahe dem inneren Umfang des Schaltkammergehäuses 4. Aus konstruktiven Gründen ist der Querschnitt beschränkt, der insgesamt für die Durchtrittsöffnungen 22 zur Verfügung steht. Durch einen zusätzlichen Kanal 24 wird aber erreicht, daß das Kabelanschlußgehäuse auch bei starker Beanspruchung nicht unzulässig belastet wird. Wie die Figur 1 zeigt, befindet sich der Kanal 24 in dem Raum zwischen den Durchrittsöffnungen 22 und dem Kabelleiter 18 bzw. dem Anschlußkörper 19, in dem das Ende des Kabelleiters 18 aufgenommen ist. Ferner ist gezeigt, daß der Kanal 24 ebenfalls den Innenraum des Kabelanschlußgehäuses 16 mit dem Schaltkammergehäuse 4 verbindet. Dabei befindet sich die eine Mündung des Kanals 24 nahe dem Kabelleiter 18 bzw. dem Anschlußkörper 19, während die andere Mündung des Kanals 24 oberhalb des Tragisolators 14 in dem Schaltkammergehäuse mündet, und zwar in radialer Richtung bezüglich der Längsachse des Schaltkammergehäuses 4.

Kommt es zu einem Störlichtbogen entsprechend dem Pfeil 21, so kann der entstehende Überdruck sowohl durch die Durchtrittsöffnungen 22 als auch durch den Kanal 24 entweichen. Wesentlich ist hierbei, daß der Fußpunkt des Störlichtbogens im Bereich der Gasströmung liegt, die durch den Kanal 24 fließt. Ein schwacher Störlichtbogen kann hierdurch zum Erlöschen gebracht werden. Gelingt die Löschung nicht, so wird der Störlichtbogen aufgrund der Gasströmung in dem Kanal 24 in das Schaltkammergehäuse 4 überführt, wo er dann zwischen dem Tragkörper 13 und der Wandung 25 des Schaltkammergehäuses weiterbrennt. Für die erwünschte Wanderung des Störlichtbogens bestehen günstige Bedingungen, weil beginnend mit einer an dem Kabelleiter 18 oder dem Anschlußkörper 19 gelegenen Zündstelle durch den Tragkörper 13 eine durchgehende leitende Bahn zur Verfügung steht. Ein unmittelbar an den Tragisolator 14 anschließender schmaler Bereich 26 des Schaltkammergehäuses 4 ist in dem gezeigten Ausführungsbeispiel mit einer vergrößerten Wanddicke ausgebildet, um die Standzeit gegenüber einem Störlichtbogen zu erhöhen. Erforderlich ist ein solcher Bereich 26 jedoch nicht.

Wie der Figur 1 ferner zu entnehmen ist, kreuzen sich die Gasströmungen durch den Kanal 24 und die Durchtrittsöffnungen 22 etwa rechtwinklig. Auch dies fördert die Löschung eines nicht zu starken Störlichtbogens. Gelingt die Löschung nicht, so breitet sich nun eine Druckwelle derart rasch aus, daß die Vorrichtung 23 zur Druckentlastung unmittelbar zum Ansprechen gebracht wird.

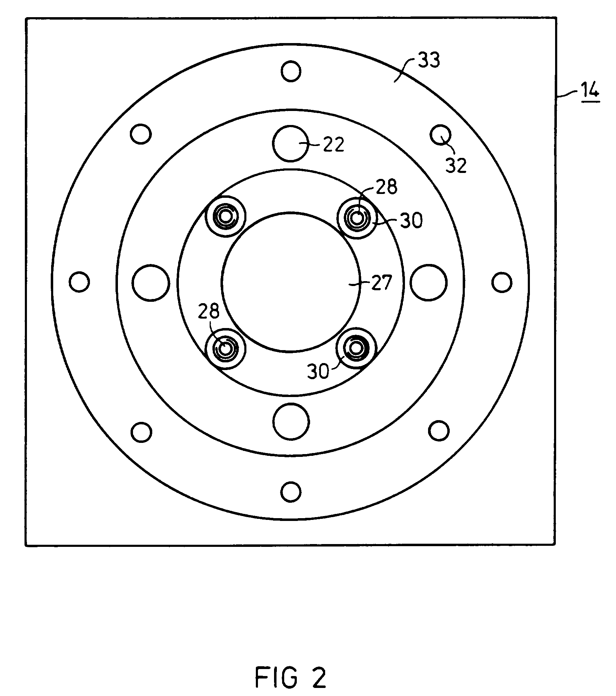

Aus der Figur 2 ist die Anordnung der Durchtrittsöffnungen 22 und die Bildung des Kanals 24 näher ersichtlich. Insgesamt sind vier Durchtrittsöffnungen 22 vorhanden. Am Umfang einer zentralen Öffnung 27 sind gleichfalls vier Gewindelöcher 28 für Schrauben angeordnet, die zur Verbindung des Tragkörpers 13 und des Tragisolators 14 dienen. Eine dieser Schrauben 29 ist in der Figur 1 erkennbar. Abstandsstücke 30 in der Gestalt von Scheiben liegen auf dem Tragisolator 14 auf und werden von den Schrauben 29 durchsetzt. Auf diese Weise wird ein sich radial erstreckender Abschnitt des Kanals 24 gebildet, der nur durch die Abstandsstücke 30 örtlich eingeengt ist. Der sich axial erstreckende Teil des Kanals entsteht durch das Übermaß der zentralen Durchtrittsöffnung 27 gegenüber dem Anschlußkörper 19, der gemäß der Figur 1 an einer Bodenfläche 31 des Tragkörpers 13 befestigt ist. Durch die Höhe der Abstandsstücke 30 ist der Querschnitt des Kanals 24 (Figur 1) bestimmt. Daher kann die gewünschte Gasströmung auf einfache Weise beeinflußt werden.

Ein weiteres Merkmal des Tragisolators 14 gemäß der Figur 2 sind Löcher 32 für Schrauben, die zur Verbindung des Schaltkammergehäuses 4, des Tragisolators 14 und des Kabelanschlußgehäuses 16 dienen. Die Löcher 32 befinden sich auf einer Ringfläche 33 innerhalb des etwa quadratischen Umrisses des Tragisolators 14.

## Patentansprüche

1. Metallgekapselte gasisolierte Schaltanlage (1) mit einem Kabelanschlußgehäuse (16) und einem anschließenden Schaltkammergehäuse (4) sowie mit einem zwischen dem Kabelanschlußgehäuse (16) und dem Schaltkammergehäuse (4) angeordneten Tragisolator (14) für einen die Schaltkammer (3) stützenden Tragkörper (13), wobei der Tragisolator (14) einen Anschlußkörper (19) für einen Kabelleiter (18) aufnimmt und Durchtrittsöffnungen (22) für das Isoliergas besitzt und wobei ferner das Schaltkammergehäuse (4) mit einer Vorrichtunq (23) zur Druckentlastung versehen ist, **dadurch gekennzeichnet**, daß in dem Raum zwischen den Durchtrittsöffnungen (22) und dem Anschlußkörper (13) wenigstens ein nahe dem Anschlußkörper (19) beginnender und das Kabelanschlußgehäuse (16) und das Schaltkammergehäuse (4) verbindender Kanal (24) vorgesehen ist.

2. Schaltanlage nach Anspruch 1, **dadurch** **gekennzeichnet**, daß der Kanal (24) durch zwischen dem Tragisolator (14) und einer gegenüberliegenden Bodenfläche (31) des Tragkörpers (13) eingefügte Abstandsstücke (30) gebildet ist.

3. Schaltanlage nach Anspruch 2, **dadurch** **gekennzeichnet**, daß die Mündung des Kanals (24) in dem Schaltkammergehäuse nahe den Durchtrittsöffnungen (22) angeordnet ist, derart, daß durch den Kanal (24) und die Durchtrittsöffnungen (22) auftretende Strömungen des Isoliergases einander etwa rechtwinklig kreuzen.

4. Schaltanlage nach einem der vorangehenden Ansprüche, **dadurch gekennzeichnet**, daß der Schaltkammerbehälter (4) nahe der Mündung des Kanals (24) einen Bereich (26) mit vergrößerter Wanddicke besitzt.

## Claims

1. A metal-enclosed, gas insulated switch installation (1) with a cable terminal housing (16) and an adjoining switch chamber housing (4) and with a support insulator (14) arranged between the cable terminal housing (16) and the switch chamber housing (4) for a support element (13) supporting the switch chamber (3), the support insulator (14) accommodating a connecting element (19) for a cable conductor (18) and comprising through openings (22) for the insulating gas and furthermore the switch chamber housing (4) being provided with a device (23) for pressure relief, characterised in that provided in the space between the through openings (22) and the connecting element (13)(sic) is at least one duct (24), which begins in the vicinity of the connecting element (19) and connects the cable terminal housing (16) and the switch chamber housing (4).

2. A switch installation according to claim 1, characterised in that the duct (24) is formed by spacing elements (30) inserted between the support insulator (14) and a base surface (31) of the support element (13) arranged opposite the support insulator (14).

3. A switch installation according to claim 2, characterised in that the mouth of the duct (24) in the switch chamber housing is arranged in the vicinity of the through openings (22) in such a manner that the insulating gas flows generated through the duct (24) and the through openings (22) intersect one another approximately at right angles.

4. A switch installation according to one of the preceding claims, characterised in that the switch chamber receptacle (4) comprises a region (26) with an increased wall thickness in the vicinity of the mouth of the duct (24).

## Revendications

1. Installation de coupure (1) isolée par du gaz, placée sous blindage métallique et comportant un boîtier (16) de raccordement de câbles et un boîtier contigu (4) contenant la chambre de coupure, ainsi qu'un isolateur de support (14), qui est disposé entre le boîtier (16) de raccordement de câble et le boîtier (4) formant la chambre de coupure et est prévu pour un corps de support (13) qui supporte la chambre de coupure (3), et dans lequel l'isolateur de support (14) loge un corps de raccordement (19) pour un conducteur à câbles (18) et possède des ouvertures de passage (22) pour le gaz isolant, et dans lequel en outre le boîtier (4) contenant la chambre de coupure comporte un dispositif de détente de pression (23), caractérisée par le fait qu'au moins un canal (24), qui commence à proximité du corps de raccordement (19) et relie le boîtier (16) de raccordement de câble et le boîtier (4) contenant la chambre de coupure, est prévu dans l'espace compris entre les ouvertures de passage (22) et le corps de raccordement (13).

2. Installation de coupure suivant la revendication 1, caractérisée par le fait que le canal (24) est formé par des entretoises (30) qui sont insérées entre l'isolateur de support (14) et une surface de base (31), située en vis-à-vis, du corps de support (13).

3. Installation de coupure suivant la revendication 2, caractérisée par le fait que l'embouchure du canal (24) dans le boîtier contenant la chambre de coupure est disposée à proximité des ouvertures de passage (22) de telle sorte que des courants du gaz isolant, qui apparaissent dans le canal (24) et dans les ouvertures de passage (22), se croisent approximativement à angle droit.

4. Installation de coupure suivant l'une des revendications précédentes, caractérisée par le fait que le boîtier (4) contenant la chambre de coupure possède une partie (26) ayant une épaisseur de paroi accrue, à proximité de l'embouchure du canal (24).
